# EUROPÄISCHE PATENTSCHRIFT

(11) **EP 2 913 571 B1**
(45) Veröffentlichungstag und Bekanntmachung des Hinweises auf die Patenterteilung: **24.08.2016**
(21) Anmeldenummer: 15000470.3
(22) Anmeldetag: 17.02.2015
(51) Int. Cl.: F16K 31/05

(54) **Verteilerventil**
Distribution valve
Vanne de répartition

(30) Priorität: 27.02.2014 DE 102014002838
(43) Veröffentlichungstag der Anmeldung: 02.09.2015
(73) Patentinhaber: Buschjost GmbH, 32545 Bad Oeynhausen (DE)
(72) Erfinder: Rahms, Andreas, DE - 32547 Bad Oeynhausen (DE)
(74) Vertreter: Engelmann, Kristiana

(56) Entgegenhaltungen:
- CH-A- 231 313
- DE-A1-102006 050 664
- DE-A1-102009 033 160

## Beschreibung

Die Erfindung betrifft ein Verteilerventil, insbesondere aber nicht ausschließlich für die Regelung der Kühlflüssigkeitszufuhr zu Werkzeugen an Spritzgießmaschinen. Die Kühlflüssigkeit wird dabei über Verteiler zentral zu- und abgeführt und die Verteilung auf die Einzelkreisläufe von dort mittels Handventilen bislang noch manuell eingeregelt.

Ein gattungsgemässes Ventil entsprechend den im Oberbegriff von Anspruch 1 definierten Merkmalen ist beispielsweise in CH-A-231 313 gezeigt.

Es sind auch motorisch angetriebene Verteilerventile mit den Merkmalen des Anspruchs 1 bekannt, die aber bisher für diese Zwecke nicht eingesetzt wurden, da sie diverse Nachteile aufweisen. Im Gegensatz zu handbetätigten Ventilen ist es bei den vorbekannten motorischen Ventilen z. B. nachteilig, dass bei nicht aktivem Motor nur eine Position des Ventils möglich ist.

Der Erfindung liegt daher die Aufgabe zugrunde, hier Abhilfe zu schaffen. Diese Aufgabe wird erfindungsgemäß durch ein Verteilerventil mit den Merkmalen des Anspruchs 1 gelöst.

Die das Verschlusselement betätigende Ventilstange ist dabei in einer gegenüber dem Ventilsitz gleichbleibend positionierten Hülse geführt. An der Hülse ist wiederum schiebebeweglich und ebenfalls hülsenartig ein verschiebbarer Gehäuseteil angebunden, über den die Position des Antriebsmotors veränderbar und in verschiedenen Positionen arretierbar ist. Dadurch kann auch bei ausgefallenem bzw. nicht aktivem Motor über ein Abheben des Motors und damit über die Ventilstange ebenfalls das Verschlusselement vom Ventilsitz abgehoben und das Ventil in eine Offen-Position überführt werden. Diese Positionsveränderung des Motors über das verschiebbare Gehäuseteil ist bevorzugt von Hand vorzunehmen, so dass kein zusätzlicher motorischer Antrieb benötigt wird.

Eine erfindungsgemäße Ausgestaltung sieht ein Arretierelement vor, das mit der Hülse zumindest mittelbar, beispielsweise über einen Befestigungsflansch, verbunden ist und das verschiebliche Gehäuseteil in verschiedenen Positionen festlegen bzw. arretieren kann. So kann beispielsweise eine Geschlossen-Position aber auch eine Offen-Position festgelegt werden. Dies kann vorzugsweise über eine Verschiebbarkeit des Gehäuseteils zumindest in eine Richtung begrenzendes und damit sicherndes Abstandselement bzw. Abstandselemente geschehen, welches eine dazu ausgeprägte Abstandsstufe aufweisen kann. Es ist auch möglich, das Arretierelement mehrstufig auszubilden und so mehrere Positionen des Antriebsmotors und damit des Ventils festzulegen. Unter anderem kann neben einer Offen- und einer Geschlossen-Position daher auch eine Zwischenposition, z.B. "halb geschlossen" festlegbar vorgesehen werden.

Für die erfindungsgemäßen Ventile wird oftmals die Schutzklasse IP54 oder höher gefordert, wozu der Antriebsmotor gekapselt werden muss. Das Verteilerventil ist daher bevorzugt mit einem Antriebsgehäuse vorzusehen. Um trotzdem eine geringe Baugröße zu erreichen und mehrere Ventile zueinander eng benachbart anordnen zu können, ist das Antriebsgehäuse vorzugsweise derart mit Aussparungen bzw. Einbuchtungen versehen und geformt, dass das Arretierelement von oben bedienbar ist. Auch die Möglichkeit, das gesamte Verteilerventil von oben montieren bzw. demontieren zu können, ist vorteilhaft, so dass die Form des Antriebsgehäuses bevorzugt auch Freiräume lässt, eventuelle Montageschrauben für das Ventil auf einem Verteilerrohr oder Verteilerspeicher von oben lösen und festlegen zu können. Insbesondere ist es vorteilhaft, wenn das verschiebbare Gehäuseteil drehbar, vorzugsweise um 360°, ausgestaltet ist.

Zur Platzersparnis trägt auch bei, das Antriebsgehäuse mit einer Kabeleinführung von der Unter- oder Oberseite aus zu versehen, damit kein Kabel seitlich heraustreten muss und eventuell den Einbau und andere Ventile behindert.

Für die erfindungsgemäßen Ventile sind bevorzugt lineare Schrittmotoren einzusetzen. Diese führen nach dem Einbau und nach jeder Stromunterbrechung eine Kalibrierfahrt durch, um sicher den Nullpunkt zu finden und somit eine hohe Stellgenauigkeit zu gewährleisten. Je nachdem wie die Motoransteuerung programmiert wird, fährt die Spindel a) in Richtung des Ventilsitzes als Referenzpunkt oder b) eine kleine definierte Wegstrecke vom Ventilsitz aus weg, um dann wieder gegen den Ventilsitz (als definierten Widerstand) anzufahren.

Befindet sich im Fall b) in dem Sammelbehälter bzw. dem Verteiler während der Kalibierfahrt noch Medium und/oder steht der Behälter unter Druck, kann bei einer Kalibrierfahrt eines eigentlich geschlossenen Ventils ungewollt und unkontrolliert Medium über den Ausgang austreten. Um diesen unerwünschten Effekt zu verhindern und gleichzeitig die Kalibrierfahrt ausführen zu können, ist das erfindungsgemäße Ventil bevorzugt konstruktiv mit einer Dichtmechanik gegen unkontrolliertes Austreten von Medium gesichert. Dies kann vorzugsweise dadurch geschehen, dass die Ventilstange mit dem Verschlusselement um eine Leerhubhöhe (der Kalibrierfahrt) gegeneinander axial verschieblich und mit einer Feder vorgespannt verbunden ist. Die Vorspannung durch die Feder führt dabei dazu, dass das Verschlusselement stets auf dem Ventilsitz verbleibt, auch wenn die Ventilstange angehoben wird, um die Kalibierfahrt auszuführen.

Die Verbindung der Ventilstange mit dem Verschlusselement kann vorzugsweise über eine Verstiftung erfolgen, die sich durch die Ventilstange und einen Schaftteil des Verschlusselementes erstreckt. Dabei ist der Verbindungsstift in einem der beiden zu verbindenden Teile fest und in dem anderen mit dem erforderlichen Spiel gehalten. Zur Schonung des Ventils ist die Verstiftung bevorzugt so auszulegen, dass die Dichtkraft in der geschlossenen Ventilstellung nicht über den Zylinderstift übertragen wird, sondern direkt von der Ventilstange auf das Verschlusselement. Das Spiel setzt sich dazu aus der Leerhubhöhe und einem zusätzlichen Restluftspalt zusammen. Während der Kalibrierfahrt gleicht der Leerhub dann die Bewegung des Motors aus. Die Dichtkraft des Verschlusselementes auf dem Ventilsitz wird zum Einen durch die Feder unterstützt und zum Anderen durch die anliegende Druckdifferenz des Betriebsmediums auf beiden Seiten gewährleistet.

Weitere Vorteile und Einzelheiten ergeben sich aus den Unteransprüchen und einem in den Zeichnungen dargestellten Ausführungsbeispiel, das im Folgenden beschrieben wird; es zeigen:
- Fig. 1a bis 1e:: Verschiedene Ansichten eines erfindungsgemäßen Ventils,
- Fig. 2a bis 2c:: Fünf der in Fig. 1 dargestellten Ventile aneinandergereiht und in unterschiedlichen Positionen und
- Fig. 3a bis 3c:: Den Gegenstand aus Fig. 2 in unterschiedlichen Positionen vor und während einer Kalibrierfahrt.

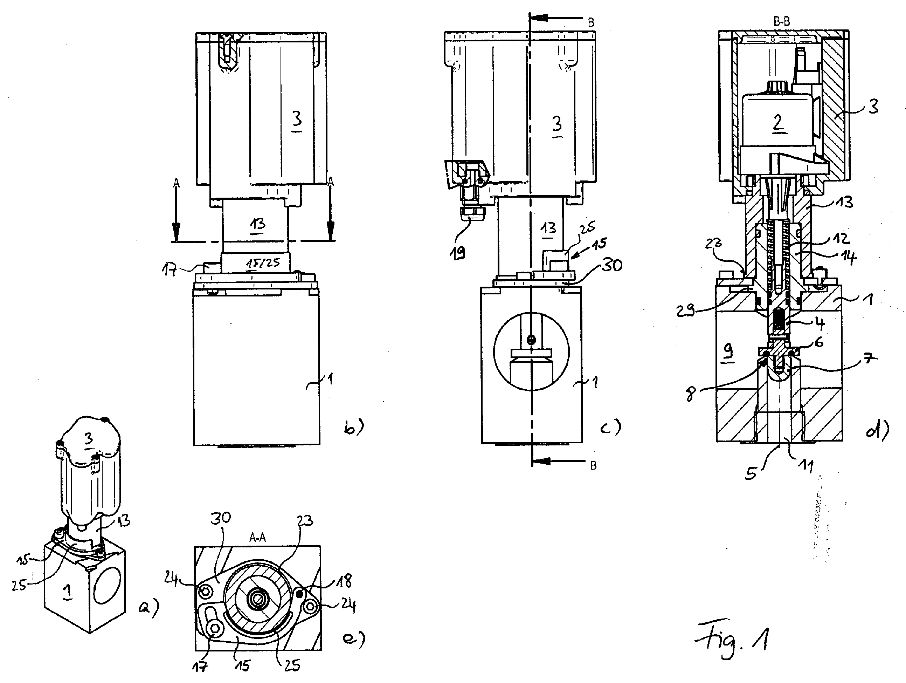

In Fig. 1 ist ein erfindungsgemäßes Verteilerventil auf einem Teilstück eines Tankprofils bzw. Verteilertanks 1 dargestellt und zwar in Fig. 1 a in einer perspektivischen Ansicht, in Fig. 1b in einer Seitenansicht, in Fig. 1c in einer dazu um 90° gedrehten Seitenansicht, in Fig. 1d in einem Schnitt in Richtung B-B durch Fig. 1c und in Fig. 1e in einem Schnitt in Richtung A-A durch Fig. 1 b. Das Ventil weist einen Antriebsmotor 2 auf, der in einem Antriebsgehäuse 3 gekapselt ist. Der Motor wirkt auf eine Ventilstange 4, oftmals auch Ventilspindel genannt ein, wodurch diese in Richtung der Längsachse 5 auf- und abbewegt werden kann. Die Ventilstange 4 trägt an ihrem vorderen Ende ein Verschlusselement 6, oftmals auch als Ventilteller bezeichnet. Das Verschlusselement 6 hat eine integrierte Dichtung und einen Regelkegel 7 und kann so einen im Verteilertank 1 ausgebildeten Ventilsitz 8 abdichten, so dass kein Medium aus dem Inneren 9 des Verteilertanks zum Ausgang 11 überströmen kann.

In dem Fall, dass der Motor 2 ausfällt bzw. unbestromt ist, soll das Ventil sicher in der in Fig. 1 dargestellten Geschlossen-Position verbleiben. Um dies zu unterstützen ist an der Ventilstange 4 ein Druckelement 12, hier in Form einer Spiralfeder, vorgesehen, das das Verschlusselement 6 über die Ventilstange 4 gegen den Ventilsitz 8 drückt. Durch Bestromung des Motors 2 kann die Ventilstange 4 gegen die Kraft des Druckelementes 12 nach oben gezogen werden, so dass das Verschlusselement 6 vom Ventilsitz 8 abhebt und das Ventil öffnet.

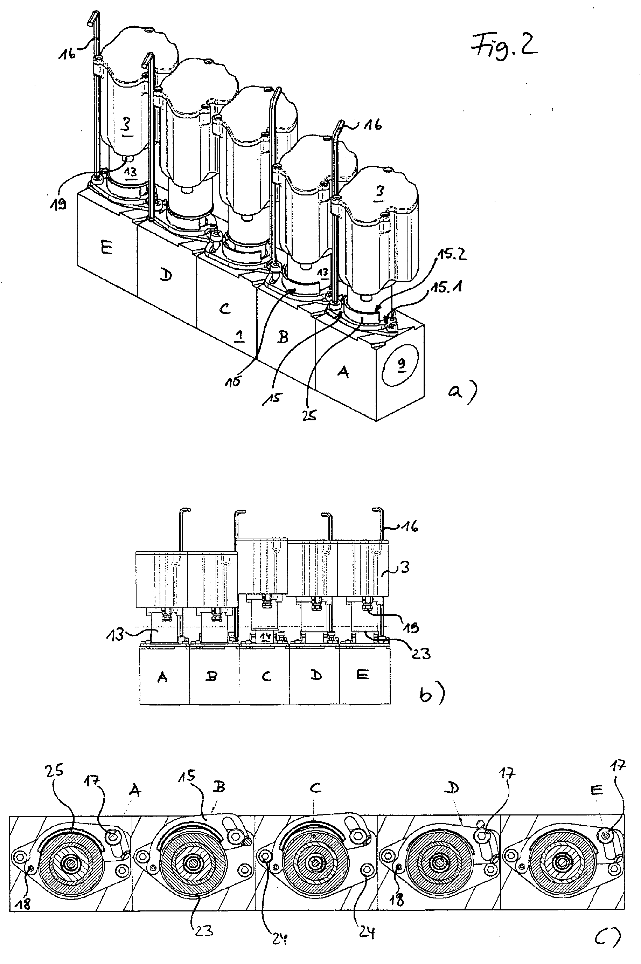

Die Ventilstange 4 ist hinsichtlich ihrer Linearbewegung in einer Hülse 14 geführt. Auf der Hülse 14 ist wiederum verschiebbar und in verschiedenen Positionen arretierbar ein Gehäuseteil 13 geführt, das mit dem Antriebsmotor 2 - hier über das Antriebsgehäuse 3 - fest verbunden ist. Verschiebt man das Gehäuseteil 13 gegenüber der am Verteilertank 1 fixierten Hülse 14 nach oben, wird der Motor ebenfalls nach oben verlagert und damit die Ventilstange 4, so dass das Verschlusselement 6 vom Ventilsitz 8 abhebt und das Ventil in eine Offen-Position überführt ist. Um diese verschiedenen Positionen zu sichern, wird ein in Fig. 1e dargestelltes Arretierelement 15 verwendet, das in Fig. 2 anhand der verschiedenen Ventilpositionen differenzierter erläutert wird.

Die fünf in Fig. 2 in unterschiedlichen Ansichten dargestellten Ventile zeigen verschiedene Ventilpositionen A bis E vom geschlossenen Zustand bei unbestromtem Motor A bis zum in einer Offen-Position fixierten Zustand E bei ebenfalls unbestromtem Motor. In Position A wird dazu über einen von oben angesetzten Innensechskantschlüssel 16 eine Schraube 17 gelöst, die das hier bügelförmige Arretierelement 15 in der jeweils gewählten Position fixiert. In Position B wird das gelöste Arretierelement 15 um eine feste Schwenkachse 18 nach außen verschwenkt und gibt so einen kleinen Flansch 23 (siehe auch Fig. 1 d) des Gehäuseteils 13 frei. Sodann wird zum Erreichen von Position C der Antriebsmotor mit Antriebsgehäuse 3 über das Gehäuseteil 13 angehoben bzw. nach oben gezogen und dadurch das Ventil manuell geöffnet. Damit die angehobene Einheit nicht wieder vollständig heruntersinkt, ist in Position D das Arretierelement 15 wieder nach innen verschwenkt, bis es an der Hülse 14 anliegt. Der Arretierbügel 15 ist dabei noch weiter zur Ventilmitte verschwenkt als ursprünglich in Position A. Dadurch gelangt ein Abstandselement 25 des Arretierelementes 15 unter das Gehäuseteil 13. Das Gehäuseteil 13 mit daraufliegendem Antriebsgehäuse 3 und Motor kann daher nur wieder so weit heruntersinken, bis es auf der Oberseite des Abstandselementes 25 aufliegt. Dieser erreichte Zustand wird dann wie in Position E dargestellt durch Anziehen der Schraube 17 fixiert, so dass das Ventil in einer Offenposition bleibt. Der Vorgang wird auch als Handnotbetätigung bezeichnet.

Bei der dargestellten Ausführungsform hat das bügelförmige Arretierelement 15 zwei Abstandsstufen 15.1 und 15.2, wobei die eine 15.1 das Ventil in der geschlossenen Position fixiert, während die andere 15.2 zur Fixierung der Offen-Position dient. Das Ventil kann allerdings auch in einer hier nicht dargestellten Ausführungsform mit einem mehrstufigen Arretierelement versehen sein, das beispielsweise noch die Fixierung einer Halboffen-Position ermöglicht.

Fig. 2 zeigt ebenfalls deutlich, dass das hier um 360° drehbare Antriebsgehäuse 3 platzoptimiert mit verschiedenen Ausnehmungen bzw. Einbuchtungen versehen ist, über die zum Einen zur Handbetätigung die bevorzugt verliersicher gestaltete Schraube 17 gelöst und festgezogen werden kann und zum Anderen die komplette Montage und Demontage des Ventils von oben möglich ist durch Lösen bzw. Befestigen von Schrauben 24, die die Hülse 14 bevorzugt über einen an ihr angeformten Befestigungsflansch 29 und eine Fixierplatte 30 am Verteilertank 1 festlegen. Ebenfalls zur Platzoptimierung dient eine in Fig. 1c, 2a und 2b erkennbare Kabeleinführung 19 (mit nicht dargestelltem Kabel) jeweils an der Unterseite des Antriebsgehäuses 3.

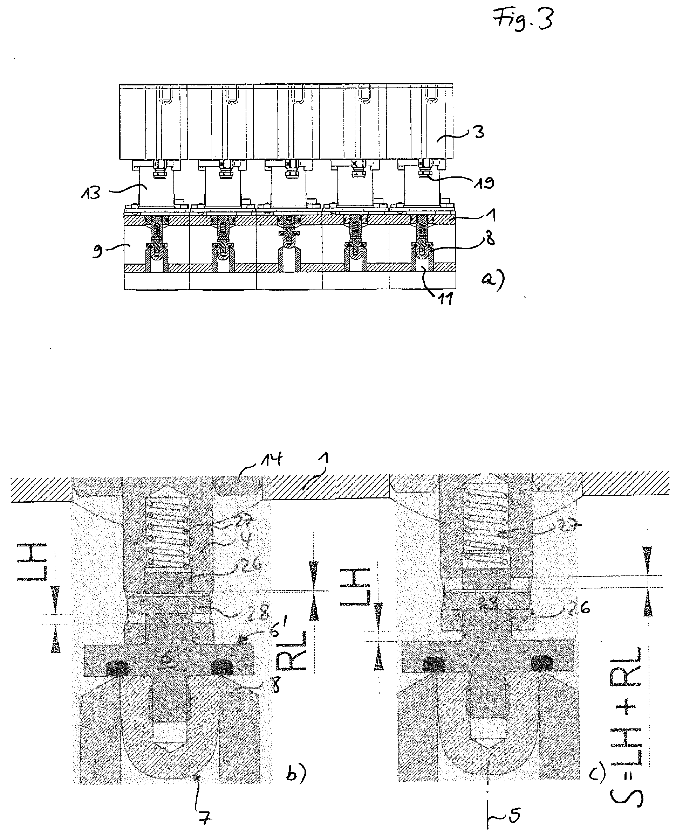

In Fig. 3 ist eine Ventilkette ähnlich Fig. 2 jedoch mit geschnittenem Verteilertank 1 dargestellt. Lediglich das mittlere Ventil ist geöffnet, während die jeweils beiden äußeren Ventile geschlossen sind. Die Fig. 3b und 3c sind Detailvergrößerungen und zeigen in Fig. 3b das geschlossene Ventil in Ruhestellung und in Fig. 3c das Ventil während einer Kalibrierfahrt, bei der es dennoch in einer geschlossenen Position verbleibt. Um eine solche Kalibierfahrt ohne Öffnung des Ventils zu ermöglichen, ist das Verschlusselement 6 über ein Schaftteil 26 mit der Ventilstange 4 in Richtung der Längsachse 5 verschieblich verbunden. Dazu ist hier das Schaftteil 26 in einem Sackloch der Ventilstange 4 geführt. In diesem Sackloch befindet sich eine Feder 27, die das Verschlusselement 6 gegen die Ventilstange 4 vorspannt. Die Verbindung zwischen Verschlusselement 6 und Ventilstange 4 ist über eine Verstiftung mit einem Verbindungsstift 28 gesichert, der sich sowohl durch das Schaftteil 26 des Verschlusselementes 6 als auch durch die Ventilstange 4 hindurch erstreckt. Dabei ist der Verbindungsstift 28 hier im Schaftteil 26 festgehalten, hat jedoch in der Öffnung der Ventilstange 4 Spiel, so dass sich das Schaftteil 26 im Sackloch der Ventilstange 4 auf- und abbewegen kann. Das Gesamtspiel S setzt sich zusammen aus der Höhe eines Leerhubs LH für die Kalibierfahrt und der Höhe eines Restluftspalts RL, der sicherstellt, dass das Ventil bei einer Kalibierfahrt (Fig. 3c) über die Kraft der Feder 27 (ggf. durch die Druckdifferenz der an der Oberseite 6' des Verschlusselementes 6 und dem Regelkegel 7 wirkenden Medien unterstützt) geschlossen bleibt. Die Federkraft ist daher entsprechend unter Berücksichtigung der Druckdifferenz des Betriebsmediums auszuwählen. Je nachdem wie die Motoransteuerung programmiert wird, kann die vorbeschriebene Dichtmechanik auch entfallen und die Ventilstange (4) mit dem Verschlusselement (6) als ein Bauteil insbesondere einstückig, ausgeführt werden.

Das erfindungsgemäße Verteilerventil ist außerordentlich vielfältig einsetzbar und ermöglicht unabhängig vom Antriebsmotor die Fixierung einer Offen- oder einer Geschlossen-Position. Es ist in der darstellten Ausführungsform auf engem Raum von oben montierbar und lässt bei sicherem Verschluss den Einsatz von linearen Schrittmotoren zu, die für ihre präzise Funktion eine Kalibierfahrt benötigen.

## Patentansprüche

1. Verteilerventil mit einem Gehäuse (3,13), einem Antriebsmotor (2) und einer mit diesem verbundenen, von diesem angetriebenen, linear beweglichen und teilweise in einer Hülse (14) geführten Ventilstange (4) mit angekoppeltem Verschlusselement (6) sowie zumindest einem zwischen Motor (2) und Verschlusselement (6) wirkenden Druckelement (12), das derart angeordnet ist, dass eine zusätzliche Schließkraft zum Motor (2) auf das Verschlusselement (6) in Richtung auf einen Ventilsitz (8) wirkt, **dadurch gekennzeichnet, dass** der Motor (2) mit einem gegenüber der Hülse (14) verschiebbaren und in verschiedenen Positionen arretierbaren Gehäuseteil (13) verbunden ist, das die Motorposition festlegt, wodurch dessen Abstand zum Ventilsitz (8) bei gegenüber dem Ventilsitz (8) gleichbleibend positionierter Hülse (14) veränderbar ist.

2. Verteilerventil nach Anspruch 1, **gekennzeichnet durch** ein Arretierelement (15), das derart mit der Hülse (14) verbindbar ausgestaltet ist, dass es das verschiebbare Gehäuseteil (13) in verschiedenen Positionen festlegen kann.

3. Verteilerventil nach Anspruch 2, **dadurch gekennzeichnet, dass** das Arretierelement (15) verschwenkbar und/oder verschieblich mit der Hülse (14) verbunden ist und mindestens ein die Verschiebbarkeit des Gehäuseteils (13) zumindest in eine Richtung begrenzendes Abstandselement (25) aufweist.

4. Verteilerventil nach Anspruch 2 oder 3, **dadurch gekennzeichnet, dass** das Arretierelement (15) mit mindestens einer Abstandsstufe (15.1,15.2) ausgebildet ist.

5. Verteilerventil nach Anspruch 4, **dadurch gekennzeichnet, dass** das Arretierelement (15) mehrstufig ausgebildet ist.

6. Verteilerventil nach einem der Ansprüche 2 bis 5, **gekennzeichnet durch** ein Antriebsgehäuse (3), das derart geformt ist, dass das Arretierelement (15) von oben bedienbar ist.

7. Verteilerventil nach einem der vorstehenden Ansprüche, **gekennzeichnet durch** ein Antriebsgehäuse (3), das eine Kabeleinführung (19) von der Unter- oder Oberseite aus hat.

8. Verteilerventil nach einem der vorstehenden Ansprüche, **dadurch gekennzeichnet, dass** die Ventilstange (4) mit dem Verschlusselement (6) um eine Leerhubhöhe (LH) gegeneinander axial verschieblich und mit einer Feder (27) vorgespannt verbunden ist.

9. Verteilerventil nach Anspruch 8, **dadurch gekennzeichnet, dass** die Verbindung der Ventilstange (4) mit dem Verschlusselement (6) über eine Verstiftung der Ventilstange (4) mit einem Schaftteil (26) des Verschlusselements (6) erfolgt, wobei der Verbindungsstift (28) in einem der beiden verbundenen Teile (4,26) fest und in dem anderen mit Spiel (S) gehalten ist.

10. Verteilerventil nach Anspruch 9, **dadurch gekennzeichnet, dass** das Spiel (S) sich aus der Leerhubhöhe (LH) plus einem Restluftspalt (RL) zusammensetzt.

11. Verteilerventil nach einem der Ansprüche 8 bis 10, **dadurch gekennzeichnet, dass** die Kraft der Feder (27) derart ausgelegt ist, dass eine erforderliche Dichtkraft bei geschlossenem Ventil von der Ventilstange (4) über die Feder (27) auf das Verschlusselement (6) übertragen wird.

## Claims

1. Distribution valve comprising a housing (3, 13), a drive motor (2) and a valve rod (4) which is connected to said drive motor, is driven thereby, can move linearly and is guided at least in part in a sleeve (14), further comprising a coupled closure element (6) and at least one pressure element (12) which acts between the motor (2) and the closure element (6) and is arranged such that an additional closure force at the motor (2) acts on the closure element (6) towards a valve seat (8), **characterised in that** the motor (2) is connected to a housing part (13) which can be displaced relative to the sleeve (14), can be locked in various positions and determines the motor position, as a result of which the spacing between said motor and the valve seat (8) can be modified when the sleeve (14) is positioned in an unchanging manner with respect to the valve seat (8).

2. Distribution valve according to claim 1, **characterised by** a locking element (15) which is designed to be connectable to the sleeve (14) such that it can fix the displaceable housing part (13) in various positions.

3. Distribution valve according to claim 2, **characterised in that** the locking element (15) is connected to the sleeve (14) in a pivotable and/or displaceable manner and comprises at least one spacer element (25) which limits the displacability of the housing part (13) at least in one direction.

4. Distribution valve according to either claim 2 or claim 3, **characterised in that** the locking element (15) is designed having at least one spacer stage (15.1, 15.2).

5. Distribution valve according to claim 4, **characterised in that** the locking element (15) is designed to have multiple stages.

6. Distribution valve according to any of claims 2 to 5, **characterised by** a drive housing (3) which is shaped such that the locking element (15) can be operated from above.

7. Distribution valve according to any of the preceding claims, **characterised by** a drive housing (3) which has a cable entry (19) from the bottom or top thereof.

8. Distribution valve according to any of the preceding claims, **characterised in that** the valve rod (4) and the closure element (6) are interconnected so as to be axially displaceable relative to one another by a no-load stroke height (LH) and preloaded by a spring (27).

9. Distribution valve according to claim 8, **characterised in that** the valve rod (4) is connected to the closure element (6) by pinning the valve rod (4) to a shaft part (26) of the closure element (6), the connection pin (28) being rigidly held in one of the two interconnected parts (4, 26) and being held with play (S) in the other of said parts.

10. Distribution valve according to claim 9, **characterised in that** the play (S) consists of the no-load stroke height (LH) plus a residual air gap (RL).

11. Distribution valve according to any of claims 8 to 10, **characterised in that** the force from the spring (27) is such that, when the valve is closed, a required sealing force is transmitted from the valve rod (4) to the closure element (6) by means of the spring (27).

## Revendications

1. Vanne de distribution comprenant un boîtier (3, 13), un moteur d'entraînement (2) et une tige de vanne (4), qui est reliée audit moteur d'entraînement, qui est entraînée par celui-ci, qui est mobile linéairement, qui est guidée partiellement dans un manchon (14) et à laquelle est accouplé un élément de fermeture (6), ainsi qu'au moins un élément de pression (12) qui agit entre le moteur (2) et l'élément de fermeture (6) et qui est disposé de telle sorte qu'une force de fermeture supplémentaire agit par rapport au moteur (2) sur l'élément de fermeture (6) en direction d'un siège de vanne (8), **caractérisée en ce que** le moteur (2) est relié à un élément de boîtier (13) qui est mobile par rapport au manchon (14) et bloqué dans différentes positions et qui détermine la position du moteur de sorte que sa distance par rapport au siège de vanne (8) peut être modifiée lorsque le manchon (14) est positionnée de façon constante par rapport au siège de vanne (8).

2. Vanne de distribution selon la revendication 1, **caractérisée par** un élément de blocage (15) qui est conçu de manière à être reliée au manchon (14) de façon à pouvoir placer l'élément de boîtier mobile (13) dans différentes positions.

3. Vanne de distribution selon la revendication 2, **caractérisée, en ce que** l'élément de blocage (15) est relié de façon pivotante et/ou coulissante au manchon (14) et comporte au moins un élément d'écartement (25) qui limite le coulissement de l'élément de boîtier (13) au moins dans un sens.

4. Vanne de distribution selon la revendication 2 ou 3, **caractérisée en ce que** l'élément de blocage (15) est formé avec au moins un étage de distance (15.1, 15.2).

5. Vanne de distribution selon la revendication 4, **caractérisée en ce que** l'élément de blocage (15) est réalisé avec plusieurs étages.

6. Vanne de distribution selon l'une des revendications 2 à 5, **caractérisée par** un boîtier d'entraînement (3) qui est conformé de telle sorte que l'élément de bocage (15) peut être actionné depuis le haut.

7. Vanne de distribution selon l'une des revendications précédentes, **caractérisée par** un boîtier d'entraînement (3) qui comporte une entrée de câble (19) depuis le côté inférieur ou supérieur.

8. Vanne de distribution selon l'une des revendications précédentes, **caractérisée en ce que** la tige de vanne (4) est reliée à l'élément de fermeture (6) de façon coulissante axialement par rapport à celui-ci sur une hauteur de course à vide (LH) et en étant précontrainte par un ressort (27).

9. Vanne de distribution selon la revendication 8, **caractérisée en ce que** la liaison de la tige de vanne (4) à l'élément de fermeture (6) est effectuée par assemblage de la tige de vanne (4) à un élément d'arbre (26) de l'élément de fermeture (6) au moyen de goujons, la broche de liaison (28) étant maintenue rigidement dans l'un des deux éléments reliés (4,26) fixé et avec un certain jeu (S) dans l'autre.

10. Vanne de distribution selon la revendication 9, **caractérisée en ce que** le jeu (S) se compose de la hauteur de course à vide (LH) et d'un espace résiduel (RL).

11. Vanne de distribution selon l'une des revendications 8 à 10, **caractérisée en ce que** la force du ressort (27) est dimensionnée de telle sorte que, lorsque la vanne est fermée, une force d'étanchéité nécessaire est transmise par la tige de vanne (4) à l'élément de fermeture (6) par le biais du ressort (27).
